# EUROPEAN PATENT APPLICATION

(11) **EP 2 642 462 A1**
(43) Date of publication of application: **25.09.2013**
(21) Application number: 11841344.2
(22) Date of filing: 16.11.2011
(51) Int. Cl.: G08G 1/16, G01C 21/26, G08G 1/09, B60R 21/00

(54) **DRIVING ASSISTANCE SERVICE PROVIDING DEVICE, PROCESSING DEVICE, AND CONTROL METHOD**

(30) Priority: 19.11.2010 JP 2010259159
(71) Applicant: Mitsubishi Heavy Industries, Ltd., Tokyo 108-8215 (JP)
(72) Inventor: HATTORI Yuriko, Tokyo 108-8215 (JP); TERANISHI Susumu, Tokyo 108-8215 (JP); KATO Masato, Tokyo 108-8215 (JP); ITO Masayoshi, Tokyo 108-8410 (JP)
(74) Representative: Henkel, Breuer & Partner
(86) International application number: PCT/JP2011/076382
(87) International publication number: WO 2012/067140

(57) **Abstract**

This processing device has an external device function identification unit which identifies a function of each external device; a data type identification unit which identifies the type of data received from an external device via an interface (150, 160, 170, 180); a providing service selection unit which, on the basis of the type of data identified by the data type identification unit, selects one service that should be provided from among a variety of services registered in advance as services for assisting with the driving of a vehicle; a function corresponding data generation unit which, from among the functions of each external device identified by the external device function identification unit, generates output data for the external device functioning as an output device by executing the processing corresponding to the service selected by the providing service selection unit using the data received from the external device; and a function corresponding data output unit which outputs the data generated by the function corresponding data generation unit to the external device functioning as the output device.

## Description

### [Technical Field]

The present invention relates to a driving assistance service providing device, a processing device, a control method, and a program. More particularly, the present invention relates to a driving assistance service providing device, which provides various services for assisting with the driving of a vehicle, a processing device, which performs processing corresponding to functions of external devices connected to a plurality of interfaces for connecting various external devices, and a control method, by which the processing device is controlled. This application is based upon and claims the benefit of priority from prior Japanese Patent Application No. 2010-259159, filed November 19, 2010, the entire contents of which are incorporated herein.

### [Background Art]

Many electronic toll collection system (ETC) on-board units using a dedicated shot range communication (DSRC) scheme are currently becoming widespread as devices for use in an ETC that performs the toll collection of a toll road such as a highway without stopping. Thereby, the ETC on-board units enable the toll collection to be smoothly performed on the toll road and greatly contribute to traffic decongestion.

Recently, a DSRC on-board unit, which is a higher-order model of the ETC on-board unit, serves as a device utilized to provide safe driving assistance information or road traffic information about accidents and congestion in addition to an ETC function. A type of DSRC on-board unit that works with a car navigation system and a type of DSRC on-board unit having a speech generation function have been released. In the future, with the spread of intelligent transport systems (ITS) or telematics services compatible with inter-vehicle communication, optical communication, network communication, or the like, the DSRC on-board units are expected to have multiple functions as a terminal for receiving various services in a car (for example, see Non-Patent Documents 1 and 2).

### [Prior Art]

### [Non-Patent Documents]

[Non-Patent Document 1]: "Support for Comfortable and Safer Drive Compatible with DSRC Service, Announcement of Launch of Mitsubishi Electric 'HDD Car Navigation System' and 'DSRC On-Board Unit'," [Online], September 28, 2009, Mitsubishi Electric Corporation, [Search on September 07, 2010], Internet, <URL:http://www.mitsubishielectric.co.jp/news-data/2009/pdf/0928.pdf>
[Non-Patent Document 2]: "Support for Safer Drive on Highway, Launch of Stand-Alone DSRC On-Board Unit CY-DSR1000D in Which Audio Assist of DSRC (Spot Communication) Service Is Possible," [Online], February 22, 2010, Panasonic Corporation, [Search on September 7, 2010], Internet, <http://panasonic.co jp/corp/news/official.data/data.dir/jn100222-1/jn100222-l.html>

### [Summary of the Invention]

### [Problems to be Solved by the Invention]

With the spread of ITS or telematics services as described above, manufacturers of various on-board units developing DSRC on-board units or car navigation devices are implementing the provision of new ITS or telematics services by causing functions of devices to cooperate with each other by connecting a plurality of devices having different functions. When the devices are connected and the functions of the devices cooperate with each other, a user should prepare each device corresponding to a desired service. Thus, even when the user, for example, already owns a device for a car navigation system, if the device does not correspond to the desired service, a device corresponding to the desired service should be prepared to receive the desired service.

### [Means for Solving the Problems]

In order to solve the above-described problems, according to a first aspect of the present invention, a driving assistance service providing device, which provides various services for assisting with driving of a vehicle, includes a plurality of interfaces configured to connect various external devices; and a processing device configured to perform processing corresponding to a function of each external device connected to each interface. The processing device includes an external device function identification unit configured to identify the function of each external device connected to each interface; a data type identification unit configured to identify a type of data received from the external device via the interface; a providing service selection unit configured to select one service to be provided from among various services registered in advance as services for assisting with the driving of the vehicle based on the type of data identified by the data type identification unit; a function corresponding data generation unit configured to generate output data for an external device functioning as an output device among functions of the external devices identified by the external device function identification unit by executing processing corresponding to the service selected by the providing service selection unit using the data received from the external device; and a function corresponding data output unit configured to output the data generated by the function corresponding data generation unit to the external device functioning as the output device.

According to a second aspect of the present invention, a processing device, which performs processing corresponding to functions of external devices connected to a plurality of interfaces for connecting various external devices, includes an external device function identification unit configured to identify a function of each external device connected to each interface; a data type identification unit configured to identify a type of data received from the external device via the interface; and a providing service selection unit configured to select one service to be provided from among various services registered in advance as services for assisting with driving of a vehicle based on the type of data identified by the data type identification unit. In addition, the processing device includes a function corresponding data generation unit configured to generate output data for an external device functioning as an output device among the functions of the external devices identified by the external device function identification unit by executing processing corresponding to the service selected by the providing service selection unit using the data received from the external device; and a function corresponding data output unit configured to output the data generated by the function corresponding data generation unit to the external device functioning as the output device.

According to a third aspect of the present invention, a control method of controlling a processing device, which performs processing corresponding to functions of external devices connected to a plurality of interfaces for connecting various external devices, includes an external device function identification step of identifying a function of each external device connected to each interface; a data type identification step of identifying the type of data received from the external device via the interface; and a providing service selection step of selecting one service to be provided from among various services registered in advance as services for assisting with driving of a vehicle based on the type of data identified in the data type identification step. In addition, the control method includes a function corresponding data generation step of generating output data for an external device functioning as an output device among the functions of the external devices identified in the external device function identification step by executing processing corresponding to the service selected in the providing service selection step using the data received from the external device; and a function corresponding data output step of outputting the data generated in the function corresponding data generation step to the external device functioning as the output device.

Note herein that the brief description above of the present invention does not recite all the essential features of the present invention, but sub-combinations of these feature groups can also constitute the present invention.

### [Effects of the Invention]

As apparent from the above description, in the present invention, a plurality of interfaces is provided for connecting various external devices. Processing corresponding to a function of each external device connected to each interface is performed. Accordingly, even in an old-type external device, which does not have a function corresponding to a desired service, it is possible to implement the desired service by connecting a driving assistance service providing device of the present invention.

### [Brief Description of the Drawings]

FIG 1 is a diagram illustrating an example of a use environment of a driving assistance service providing device in accordance with an embodiment.
FIG 2 is a diagram illustrating a block configuration of a central processing unit (CPU) of the driving assistance service providing device.
FIG 3 is a diagram illustrating an example of data stored in a service data storage unit in the form of a table.
FIG 4 is a diagram illustrating an example of an operation flow of the driving assistance service providing device.

### [Embodiments of the Invention]

Embodiments of the present invention will be described hereinafter. However, the following embodiments do not limit the invention claimed in the attached claims, and all combinations of features described in the embodiments are not always essential to the solving means of the invention.

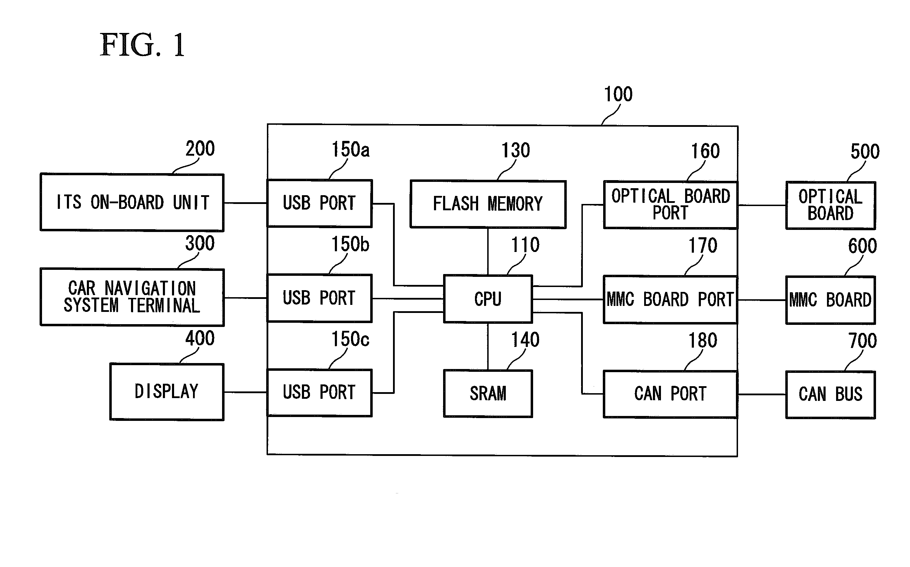

FIG 1 is a diagram illustrating an example of a use environment of a driving assistance service providing device 100 in accordance with an embodiment. The driving assistance service providing device 100 is a device that provides various services for assisting with the driving of a vehicle.

The driving assistance service providing device 100 includes a CPU 110, a flash memory 130, a static random access memory (SRAM) 140, a plurality of Universal Serial Bus (USB) ports 150a to 150c (hereinafter collectively referred to as a USB port 150), an optical board port 160, a man machine controller (MMC) board port 170, and a controller area network (CAN) port 180. The CPU 110 may be an example of a "processing device" in the present invention. In addition, the USB port 150, the optical board port 160, the MMC board port 170, and the CAN port 180 may be examples of "interfaces" in the present invention.

The CPU 110 is one of components constituting the driving assistance service providing device 100, and is a device that controls the flash memory 130, the SRAM 140, the USB port 150, the optical board port 160, the MMC board port 170, and the CAN port 180 or calculates and processes data. Specifically, the CPU 110 performs processing corresponding to functions of an ITS on-board unit 200, a car navigation system terminal 300, and a display 400 connected to the USB port 150, an optical board 500 connected to the optical board port 160, an MMC board 600 connected to the MMC board port 170, and a CAN bus 700 connected to the CAN port 180.

The flash memory 130 can freely delete and write data and is a type of semiconductor memory from which content does not disappear even when a power supply is turned off. The semiconductor memory is a random access memory (RAM) from which data is freely read and to which data is freely written, but from which content disappears when the power supply is turned off and a read only memory (ROM) from which content written once is not deleted, but from which content does not disappear even when the power supply is turned off, but the flash memory 130 is a memory having both elements of the two.

The SRAM 140 is a type of RAM. Specifically, the SRAM 140 is used for a flip-flop circuit as a storage element, and does not require a storage holding operation.

The USB port 150 includes connection ports into which USB cables of the ITS on-board unit 200, the car navigation system terminal 300, and the display 400 are inserted. The ITS on-board unit 200 is a device capable of using a next-generation road service and an ETC. The car navigation system terminal 300 is a device that provides route guidance or the like and assists with the driving of a driver. The display 400 is a device that displays characters and graphics.

The optical board port 160 is a connection port into which a connector of the optical board 500 is inserted. As the optical board 500, for example, a Global Positioning System (GPS) board, a fixed wireless communication board, an optical board, and the like are included. The GPS board is a device that accurately identifies a position of the vehicle on the earth using an artificial satellite. The fixed wireless communication board, for example, is a device that performs communication according to a use frequency band of an Institute of Electrical and Electronics Engineers (IEEE) 802.16a standard. The optical board is a wireless communication board for use in road-to-vehicle communication.

The MMC board port 170 is a connection port into which a connector of the MMC board 600 is inserted. As the MMC board 600, for example, a speaker, a light-emitting diode (LED) or the like is mounted as an output device.

The CAN port 180 is a connection port for connecting an electronic circuit or each device inside a mechanism of the vehicle. Specifically, the CAN port 180 is connected to a component such as an electronic control unit (ECU), an engine, or a brake in the CAN bus 700 inside the vehicle, and used to transfer a state of the component or transmit control information.

The ITS on-board unit 200, the car navigation system terminal 300, the display 400, the optical board 500, the MMC board 600, and the CAN bus 700 may be examples of "external devices" in the present invention.

In the driving assistance service providing device 100 of the above-described configuration, the CPU 110 identifies functions of the external devices connected to the USB port 150, the optical board port 160, the MMC board port 170, and the CAN port 180. The CPU 110 identifies types of data received from the external devices via the USB port 150, the optical board port 160, the MMC board port 170, and the CAN port 180. The CPU 110 selects one service to be provided from among various services registered in advance as services for assisting with the driving of the vehicle based on the identified data types. The CPU 110 generates output data for an external device functioning as an output device among the functions of the identified external devices by executing processing corresponding to the selected service. The CPU 110 outputs the generated data to the external device functioning as the above-described output device.

In the driving assistance service providing device 100, the USB port 150, the optical board port 160, the MMC board port 170, and the CAN port 180 for connecting various external devices are provided, and processing corresponding to the functions of the external devices connected thereto is performed. Therefore, even in an old-type external device that does not have a function corresponding to a desired service, it is possible to implement the desired service using the driving assistance service providing device 100.

A configuration in which the driving assistance service providing device 100 has one CPU 110 has been described in this embodiment for the purpose of preventing the description from being complex. However, the present invention is not limited to the above, and the driving assistance service providing device 100 may include a plurality of CPUs 110.

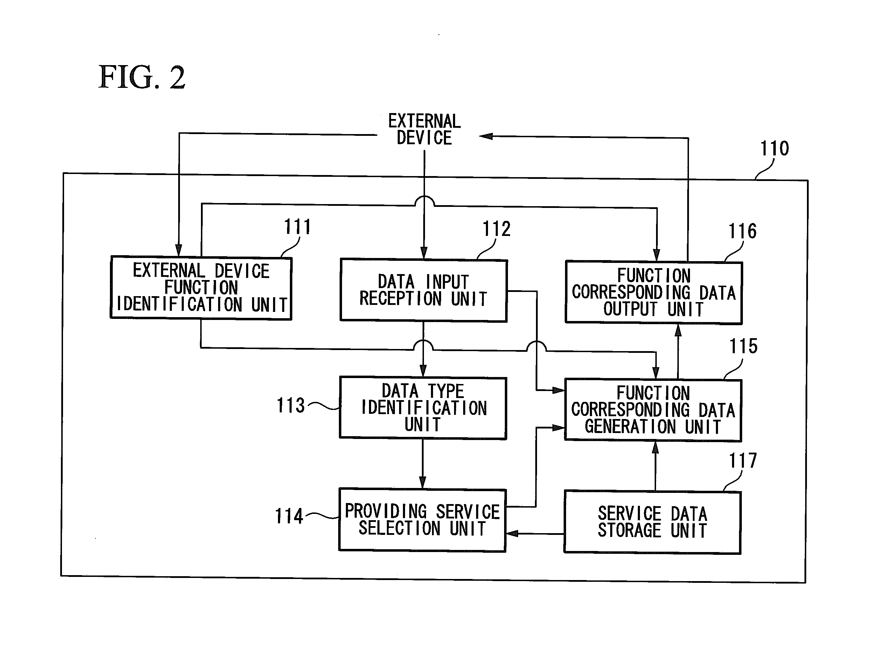

FIG 2 illustrates an example of a block configuration of the CPU 110 of the driving assistance service providing device 100. The driving assistance service providing device 100 includes an external device function identification unit (external device function data identification unit) 111, a data input reception unit 112, a data type identification unit 113, a providing service selection unit 114, a function corresponding data generation unit 115, a function corresponding data output unit 116, and a service data storage unit 117. Hereinafter, functions and operations of components will be described.

The external device function identification unit 111 identifies the functions of the external devices connected to the USB port 150, the optical board port 160, the MMC board port 170, and the CAN port 180. Specifically, when the external devices are connected to the USB port 150, the optical board port 160, the MMC board port 170, and the CAN port 180, the external device function identification unit 111 identifies the functions of the external devices. The external device function identification unit 111 transmits data indicating the identified functions of the external devices to the function corresponding data generation unit 115 and the function corresponding data output unit 116.

The data input reception unit 112 receives inputs of data output from the external devices. Specifically, when the data is output from the external devices connected to the USB port 150, the optical board port 160, the MMC board port 170, and the CAN port 180, the data input reception unit 112 receives the inputs of the data. The data input reception unit 112 transmits the data whose inputs have been received to the data type identification unit 113 and the function corresponding data generation unit 115.

The data type identification unit 113 identifies types of the data received from the external devices via the USB port 150, the optical board port 160, the MMC board port 170, and the CAN port 180. Specifically, when the data whose inputs have been received from the external devices is received from the data input reception unit 112, the data type identification unit 113 identifies the data types. The data type identification unit 113 transmits data indicating the identified data types to the providing service selection unit 114.

The providing service selection unit 114 selects one service to be provided from among various services registered in advance as services for assisting with the driving of the vehicle based on the data types identified by the data type identification unit 113. Specifically, when the data indicating the identified data types is received from the data type identification unit 113, the providing service selection unit 114 selects the one service to be provided from among various services stored in the service data storage unit 117 as the services for assisting with the driving of the vehicle. The providing service selection unit 114 transmits data for identifying the selected service to the function corresponding data generation unit 115.

The function corresponding data generation unit 115 executes processing corresponding to the service selected by the providing service selection unit 114 using the data received from the external devices. Thereby, the function corresponding data generation unit 115 generates output data for an external device functioning as an output device among the functions of the external devices identified by the external device function identification unit 111. Specifically, the function corresponding data generation unit 115 receives data indicating the identified functions of the external devices from the external device function data identification unit 111. In addition, the function corresponding data generation unit 115 receives the data whose inputs have been received from the external devices from the data input reception unit 112. When data for selecting the selected service is received from the providing service selection unit 114, the function corresponding data generation unit 115 executes processing corresponding to the service using the data received from the data input reception unit 112. Thereby, the function corresponding data generation unit 115 generates the output data for the external device functioning as the output device among the functions of the external devices indicated by the data received from the external device function identification unit 111. The function corresponding data generation unit 115 transmits the generated data to the function corresponding data output unit 116.

The function corresponding data output unit 116 outputs the data generated by the function corresponding data generation unit 115 to the external device functioning as the output device. Specifically, the function corresponding data output unit 116 receives the data indicating the identified functions of the external devices from the external device function data identification unit 111. When the generated data is received from the function corresponding data generation unit 115, the function corresponding data output unit 116 outputs the data to the external device functioning as the output device indicated by the data received from the external device function identification unit 111.

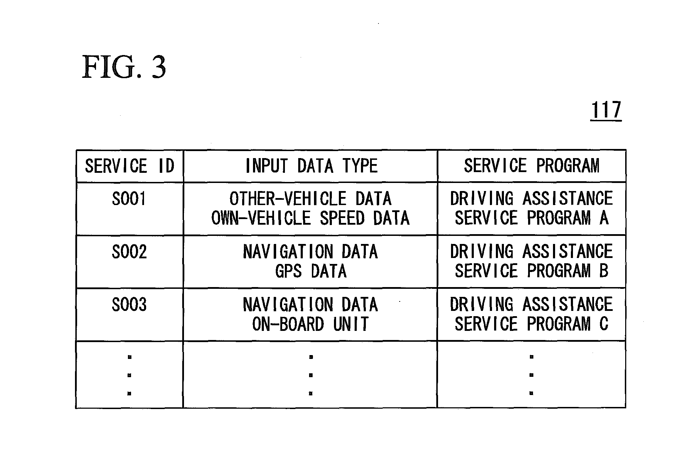

FIG. 3 illustrates an example of data stored in the service data storage unit 117 in the form of a table. In the service data storage unit 117, data of a service identifier (ID), an input data type, and a service program is associated and stored.

The service ID may be an identification code for uniquely identifying each service from among various services for assisting with the driving of the vehicle. The input data type may be a type of data to be used to execute processing corresponding to a service identified by the service ID. In addition, the service program may be a program for executing the processing corresponding to the service identified by the service ID.

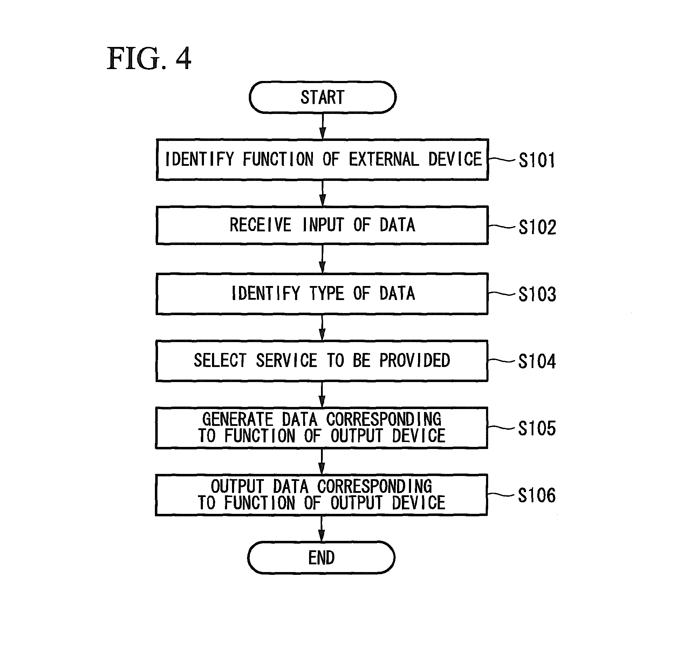

FIG 4 illustrates an example of an operation flow of the driving assistance service providing device 100. In the description of the operation flow, an example in which the driving assistance service providing device 100 executes "driving assistance service program A" illustrated in FIG 3 will be described. According to a service to be provided by executing "driving assistance service program A," when another vehicle approaches from an intersecting lane at an intersection at which visibility is poor and there is a risk of collision between its own vehicle (the present vehicle) and the other vehicle, the driver is warned of the risk. In this example, an optical communication path-side device is installed in the intersection in which visibility is poor. When a plurality of vehicles approach from a plurality of lanes which are intersected one another toward a crossing intersection, the optical communication path-side device transmits data indicating distances to the intersection between its own vehicle and the other vehicles driven in the other lanes with respect to the vehicles. The operation flow will be described with reference to all FIGS. 1 to 3.

In this example, the optical board is connected to the optical board port 160 of the driving assistance service providing device 100, the MMC board 600 equipped with a speaker serving as the output device is connected to the MMC board port 170, and the CAN bus 700 is connected to the CAN port 180 so that an input of data indicating a speed of its own vehicle can be received. When the external devices are connected to the USB port 150, the optical board port 160, the MMC board port 170, and the CAN port 180, the external device function identification unit 111 of the CPU 110 of the driving assistance service providing device 100 identifies the functions of the external devices (S101). In this example, the external device function identification unit 111 identifies that the optical board is connected to the optical board port 160, the MMC board 600 functioning as the output device is connected to the MMC board port 170, and the CAN bus 700 is connected to the CAN port 180. For example, the external device function identification unit 111 receives inputs of data indicating which external device has which function from the external devices, and identifies the functions of the external devices based on the data. The external device function identification unit 111 transmits data indicating the identified functions of the external devices to the function corresponding data generation unit 115 and the function corresponding data output unit 116.

On the other hand, when the data is output from the external devices connected to the USB port 150, the optical board port 160, the MMC board port 170, and the CAN port 180, the data input reception unit 112 of the CPU 110 receives the inputs of the data (S102). In this example, the optical board receives the data indicating the distances to the intersection between its own vehicle and the other vehicles driven in the other lanes transmitted from the optical communication path-side device as described above. The optical board outputs the data to the driving assistance service providing device 100. When an input of the data output from the optical board is received, the data input reception unit 112 acquires data indicating a speed of its own vehicle via the CAN port 180. The data input reception unit 112 transmits the data to the data type identification unit 113 and the function corresponding data generation unit 115.

When the data is received from the data input reception unit 112, the data type identification unit 113 of the CPU 110 identifies types of the data (S103). In this example, the data type identification unit 113 identifies that a type of the data received from the data input reception unit 112 is other-vehicle data and own-vehicle speed data. The data type identification unit 113 transmits data indicating the identified data type to the providing service selection unit 114.

The providing service selection unit 114 of the CPU 110 receives the data indicating the identified data type from the data type identification unit 113. The providing service selection unit 114 selects one service to be provided from among various services stored in the service data storage unit 117 as the services for assisting with the driving of the vehicle based on the data type (S104). In this example, referring to FIG 3, in the service data storage unit 117, the data type is stored in association with data relating to a service identified by service ID "S001" for a combination of "other-vehicle data" and "own-vehicle speed data." Therefore, the providing service selection unit 114 selects the service identified by service ID "S001" as the one service to be provided. The providing service selection unit 114 transmits service ID "S001" for identifying the selected service to the function corresponding data generation unit 115.

The function corresponding data generation unit 115 of the CPU 110 receives the identified functions of the external devices from the external device function data identification unit 111. In addition, the function corresponding data generation unit 115 receives data whose inputs have been received from the external devices from the data input reception unit 112. The function corresponding data generation unit 115 receives data for identifying the selected service from the providing service selection unit 114. The function corresponding data generation unit 115 executes processing corresponding to the service using the data received from the data input reception unit 112, thereby generating output data for the external device functioning as the output device among the functions of the external devices indicated by the data received from the external device function identification unit 111 (S 105). In this example, the function corresponding data generation unit 115 receives data indicating distances to the intersection between its own vehicle and other vehicles driven in other lanes and data indicating a speed of its own vehicle from the data input reception unit 112. In addition, in this example, the fact that the MMC board 600 functioning as the output device is connected to the MMC board port 170 is indicated by the data received from the external device function data identification unit 111. In this example, when service ID "S001" for identifying the selected service is received from the providing service selection unit 114, the function corresponding data generation unit 115 reads a service program "driving assistance service program A" identified by service ID "S001" from the service data storage unit 117. In this example, the function corresponding data generation unit 115 generates data corresponding to the speaker of the MMC board 600 by executing "driving assistance service program A" using the data indicating the distances to the intersection between its own vehicle and the other vehicles driven in the other lanes and the data indicating the speed of its own vehicle. For example, "driving assistance service program A" determines a risk of collision between its own vehicle and another vehicle driven in another lane based on the distances to the intersection of its own vehicle and the other vehicle driven in the other lane and the speed of its own vehicle. When there is a collision risk, "driving assistance service program A" is assumed to be a program that causes a warning message indicating that there is a collision risk to be output through audio from the speaker if the speaker is connected as the output device, and further causes a similar warning message to be displayed on a display if the display is connected as the output device. In this example, no display is connected to the USB port 150. Therefore, the function corresponding data generation unit 115 generates audio data indicating the warning message indicating that there is a risk of collision with another vehicle driven in another lane as data corresponding to the speaker of the MMC board 600 as described above. The function corresponding data generation unit 115 transmits the generated data to the function corresponding data output unit 116.

The function corresponding data output unit 116 of the CPU 110 receives data indicating the identified functions of the external devices from the external device function data identification unit 111. When the generated data is received from the function corresponding data generation unit 115, the function corresponding data output unit 116 outputs the data to the external device functioning as the output device indicated by the data received from the external device function identification unit 111 (S106). In this example, the function corresponding data output unit 116 receives audio data indicating the warning message indicating that there is a risk of collision with another vehicle driven in another lane from the function corresponding data generation unit 115. In addition, in this example, the fact that the MMC board 600 serving as the output device is connected to the MMC board port 170 is indicated by the data received from the external device function data identification unit 111. Therefore, the function corresponding data output unit 116 outputs the audio data received from the function corresponding data generation unit 115 to the MMC board 600 via the MMC board port 170.

In this example, when another vehicle approaches from an intersecting lane at an intersection at which visibility is poor and there is a risk of collision between its own vehicle (the present vehicle) and the other vehicle, a service for warning the driver of the risk is implemented.

As described above, the driving assistance service providing device 100 includes the USB port 150, the optical board port 160, the MMC board port 170, and the CAN port 180 for connecting various external devices. In addition, processing corresponding to functions of the external devices connected thereto is performed using the driving assistance service providing device 100. Therefore, an old-type external device, which does not have a function corresponding to a desired service, can also implement the desired service using the driving assistance service providing device 100.

While the present invention has been described using the embodiments, the technical scope of the present invention is not limited to the scope described in the aforementioned embodiments. It is obvious to those skilled in the art that various modifications or improvements may be added to the aforementioned embodiments. It is clear from the description of claims that such modified or improved embodiments can also be included in the technical scope of the present invention.

### [Industrial Applicability]

The present invention is configured so that a plurality of interfaces for connecting various external devices are provided and processing corresponding to a function of each external device connected to each interface among the plurality of interfaces is performed. Therefore, even when a user uses an old-type external device, which does not have a function corresponding to a desired service, the user can implement the desired service by connecting a driving assistance service providing device of the present invention to the above-described device.

### [Reference Signs List]

100: Driving assistance service providing device
110: CPU
111: External device function identification device
112: Data input reception unit
113: Data type identification unit
114: Providing service selection unit
115: Function corresponding data generation unit
116: Function corresponding data output unit
117: Service data storage unit
130: Flash memory
140: SRAM
150: USB port
160: Optical board port
170: MMC board port
180: CAN port

## Claims

1. A driving assistance service providing device, which provides various services for assisting with driving of a vehicle, comprising:
a plurality of interfaces configured to connect various external devices; and
a processing device configured to perform processing corresponding to a function of each external device connected to each interface,
wherein the processing device includes:
an external device function identification unit configured to identify the function of each external device connected to each interface;
a data type identification unit configured to identify a type of data received from the external device via the interface;
a providing service selection unit configured to select one service to be provided from among various services registered in advance as services for assisting with the driving of the vehicle based on the type of data identified by the data type identification unit;
a function corresponding data generation unit configured to generate output data for an external device functioning as an output device among functions of the external devices identified by the external device function identification unit by executing processing corresponding to the service selected by the providing service selection unit using the data received from the external device; and
a function corresponding data output unit configured to output the data generated by the function corresponding data generation unit to the external device functioning as the output device.

2. A processing device, which performs processing corresponding to functions of external devices connected to a plurality of interfaces for connecting various external devices, comprising:
an external device function identification unit configured to identify a function of each external device connected to each interface;
a data type identification unit configured to identify a type of data received from the external device via the interface;
a providing service selection unit configured to select one service to be provided from among various services registered in advance as services for assisting with driving of a vehicle based on the type of data identified by the data type identification unit;
a function corresponding data generation unit configured to generate output data for an external device functioning as an output device among the functions of the external devices identified by the external device function identification unit by executing processing corresponding to the service selected by the providing service selection unit using the data received from the external device; and
a function corresponding data output unit configured to output the data generated by the function corresponding data generation unit to the external device functioning as the output device.

3. A control method of controlling a processing device, which performs processing corresponding to functions of external devices connected to a plurality of interfaces for connecting various external devices, the method comprising:
an external device function identification step of identifying a function of each external device connected to each interface;
a data type identification step of identifying a type of data received from the external device via the interface;
a providing service selection step of selecting one service to be provided from among various services registered in advance as services for assisting with driving of a vehicle based on the type of data identified in the data type identification step;
a function corresponding data generation step of generating output data for an external device functioning as an output device among the functions of the external devices identified in the external device function identification step by executing processing corresponding to the service selected in the providing service selection step using the data received from the external device; and
a function corresponding data output step of outputting the data generated in the function corresponding data generation step to the external device functioning as the output device.
